# EUROPÄISCHE PATENTSCHRIFT

(11) **EP 1 391 591 B1**
(45) Veröffentlichungstag und Bekanntmachung des Hinweises auf die Patenterteilung: **05.04.2006**
(21) Anmeldenummer: 02018550.0
(22) Anmeldetag: 17.08.2002
(51) Int. Cl.: F01N 7/14, F01N 3/20, F01N 3/025

(54) **Vorrichtung zum Reinigen von Abgasen von Brennkraftmaschinen**
Exhaust gas cleaning device for internal combustion engine
Dispositif pour la purification de gaz d'échappement d'un moteur à combustion interne

(43) Veröffentlichungstag der Anmeldung: 25.02.2004
(73) Patentinhaber: Ford Global Technologies, LLC, Dearborn, MI 48126 (US)
(72) Erfinder: Vogt, Rainer, 52072 Aachen (DE); Scheer, Volker, 52159 Roetgen (DE)
(74) Vertreter: Drömer, Hans-Carsten

(56) Entgegenhaltungen:
- DE-A- 3 714 761
- GB-A- 2 347 970
- US-A- 5 456 079
- US-A- 5 806 307

## Beschreibung

Die Erfindung bezieht sich auf eine Abgasvorrichtung für Brennkraftmaschinen, die dazu geeignet ist, die Bildung von Nanopartikeln zu vermindern.

Kraftfahrzeuge werden üblicherweise mit Brennkraftmaschinen angetrieben. Diese Brennkraftmaschinen werden wiederum in der Regel mittels eines flüssigen oder auch eines gasförmigen Brennstoffes betrieben. Bei der bei Brennkraftmaschinen üblichen diskontinuierlichen Verbrennung des Brennstoffes mit Luft entstehen neben den gewünschten auch unvollständig verbrannte Verbrennungsprodukte. So ist insbesondere bei Brennkraftmaschinen, die nach dem Dieselverfahren arbeiten, die Entstehung von Feststoffteilchen, insbesondere Feststoffteilchen in der Größenordnung von Nanometem, sogenannten Nanopartikeln, ein Ergebnis dieser unvollständigen Verbrennung und eine unerwünschte Begleiterscheinung.

Es sind mehrere Verfahren bzw. Vorrichtungen bekannt, die zu einer Verringerung oder Beseitigung der Nanopartikel im Abgasstrom einer Brennkraftmaschine führen. So ist es üblich, die Abgasvorrichtung oder Abgasanlage einer Brennkraftmaschine mit einem sogenannten Partikelfilter, auch Partikelfalle genannt, auszurüsten. Dieser Filter besteht in der Regel aus einem monolithischen wabenförmigen Keramikkörper, der mit edlen katalytisch wirkenden Metallen wie z. B. Platin versetzt ist. In dem Partikelfilter werden während des Betriebes der Brennkraftmaschine die Nanopartikel kontinuierlich gesammelt. Da durch dieses kontinuierliche Sammeln der Partikel der Filter nach einiger Zeit verstopfen würde, ist eine Beseitigung (Regeneration) der gesammelten Nanopartikel des Filters in periodischen Abständen nötig.

Zur Regeneration des Partikelfilters sind in der beschriebenen Konfiguration üblicherweise Temperaturen von 500 bis 550° C nötig. Die Abgastemperaturen bei Dieselbrennkraftmaschinen liegen jedoch bei mittlerer Last bei ca. 300°C und bei Leerlauf darunter, reichen also nicht aus, eine Regeneration durchzuführen bzw. eine Zündung zur Verbrennung der gesammelten Partikel einzuleiten. Es sind daher mehrere Verfahren bekannt, die Abgastemperatur soweit anzuheben, das eine Regeneration einsetzen kann oder die Zündtemperatur soweit zu senken, daß eine Regeneration bei dem vorhandenen Abgastemperaturniveau erfolgen kann.

So ist z. B. aus der EP 0784 738 ein Verfahren bekannt, bei der bei einem Dieselmotor zusätzlich zur Haupteinspritzung von Treibstoff eine Nacheinspritzung während des Arbeitshubs ein Ansteigen der Abgastemperatur des Motors verursacht und so eine Regeneration auslöst.

In der EP 0 590 814 wird dagegen ein System beschrieben, bei welchem dem Kraftstoff im Kraftstofftank ein Additiv aus einem Zusatztank beigefügt wird. Dieses Additiv senkt die Zündtemperatur der gesammelten Partikel im Partikelfilter und sorgt so für deren Verbrennung.

In der WO 99151861 ist dagegen ein anderer Ansatz gewählt. Es wird dabei davon ausgegangen, daß sich die Nanopartikel erst bei Verlassen der Abgasanlage bilden, d. h., sobald sich die heißen Abgase mit der kalten Umgebungsluft mischen und abgekühlt werden. Die Partikel bilden sich danach durch Kondensation oder Keimbildung, sobald der Sättigungsgrad des kondensierbaren Anteils des Abgases überschritten wird. Der Sättigungsgrad hängt dabei unter anderem vom Partialdruck der kondensierbaren Abgasanteile, von der Abgas- bzw. Umgebungstemperatur und vom Mischungsverhältnis Abgas/Umgebungsluft ab. Es hat sich dabei gezeigt, daß insbesondere bei einem Mischungsverhältnis Abgas zu Umgebungsluft von 1:5 bis 1:30 eine verstärkte Bildung von Nanopartikeln zu beobachten ist, während bei einem Mischungsverhältnis von 1:100 keine Partikelbildung mehr zu beobachten ist. Es wird daher eine sehr aufwendige umströmte Abgasanlage vorgeschlagen, bei der das Abgas innerhalb von 100 ms soweit in der Umgebungsluft verteilt und abgekühlt wird, mit dem Ergebnis, daß keine Partikelbildung mehr beobachtet wird.

Die GB 2 347 970 A, die ebenfalls die Bildung von Nanopartikeln bzw. deren Reduzierung zum Gegenstand hat, sieht vor, das Abgassystem mit einer thermischen Isolierung zu versehen, so dass die Temperatur des Abgases auf einem möglichst hohen Niveau gehalten wird bis der Abgasstrom in die Umgebung entweicht. Die Anordnung von Hitzeschilden zu diesem Zweck wird als nicht ausreichend angesehen.

Aufbauend auf der Erkenntnis, daß die Nanopartikelbildung erst bei Verlassen der Abgase des Abgassystems auftritt, war es Aufgabe der Erfindung ein Abgassystem zu entwickeln, welches mit einfachen Mitteln eine Bildung von Nanopartikeln verhindert.

Diese Aufgabe wird durch eine Abgasanlage für Kraftfahrzeuge nach Anspruch 1 gelöst. Weitere vorteilhafte Ausgestaltungen sind in den Unteransprüchen enthalten.

Erfindungsgemäß wird die Abgasanlage so ausgestaltet, daß die Abgase auf dem Weg vom Motor bis zum Auslaß in die Umgebungsluft nicht oder nur in sehr geringen Maße abkühlen.

Dabei ist die Abgasanlage mit einer thermischen Isolierung gegen Temperaturverlust versehen, so dass die Abgase die Abgasanlage mit erhöhter Temperatur verlassen, wobei die Abgasanlage dadurch gekennzeichnet ist, dass sie mit einer zusätzlichen Vorrichtung zur Abschirmung gegen den Fahrtwind versehen ist und diese Vorrichtung zur Abschirmung mittels Karosserieteilen ausgebildet ist.

Es ist auch denkbar, bei zu starker Abkühlung der Abgase auf dem Weg zum Auslaß in die Umgebungsluft, die Abgase zusätzlich zu heizen. Im Gegensatz zur WO 99/51861 wird dabei davon ausgegangen, daß eine Bildung von Nanopartikeln nicht auftritt, wenn die Temperatur der Abgase am Auslaß so hoch ist, daß der Partialdruck der sich im Abgas befindenden unverbrannten oder teilverbrannten Stoffe den Sättigungsdruck nicht erreicht oder überschreitet. Eine Kondensation oder Keimbildung tritt so nicht ein, und es bilden sich daher auch keine Nanopartikel.

Wird die gesamte Abgasanlage oder große Teile davon mit einer Isolierung gegen Temperaturverlust versehen, behalten die Abgase annähernd die Temperatur, die sie nach Verlassen des Motors hatten. Denkbar sind dabei alle Arten thermischer Isolierung, wie sie z. B. auch in der EP 0 490 461, US 5,024,289 und WO 01/51780 beschrieben werden.

Die Erfindung sieht vor, die Abgasanlage gegen den Fahrtwind abzuschirmen. Dadurch wird die Abkühlung der Abgasanlage durch den Fahrtwind verhindert und es bleibt im wesentlichen nur die Abkühlung durch Konvektion. Die Abschirmung kann durch geeignete Karosserieteile erfolgen, wie Wärmeschutzbleche oder Abschirmbleche oder Windabweiser, Spoiler oder ähnliches.

In einer vorteilhaften Ausgestaltung der Erfindung wird die erfindungsgemäße Abgasanlage mit einer zusätzlichen Wärmequelle ausgestattet, um die Abgastemperaturen auf einem Temperatumiveau zu halten, das ausreicht, eine Bildung von Nanopartikeln zu vermeiden. Die Wärmequelle kann dabei z. B. eine elektrische Widerstandsheizung oder eine Zusatzheizung, die je nach Bedarf mit dem mitgeführten Brennstoff des Kraftfahrzeuges betrieben wird.

Die Erfindung wird anhand der in der beiliegenden Zeichnungen gezeigten Ausführungsbeispiele näher erläutert. Es zeigen
- Fig. 1: eine schematische Skizze einer bevorzugten Ausführung einer erfindungsgemäßen Abgasanlage in der Draufsicht
- Fig. 2: einen Schnitt entlang der Linie II-II von Figur 1 durch einen Teil der erfindungsgemäßen Abgasanlage
- Fig. 3: ein beispielhaftes Diagramm von Druckkurven für zwei verschiedene Abgastemperaturen während der Verdünnung des Abgases
- Fig. 4: ein beispielhaftes Diagramm von zwei Partialdruck- und Sättigungsdruckverhältnissen aufgetragen über dem Verdünnungsverhältnis Abgas in Umgebungsluft

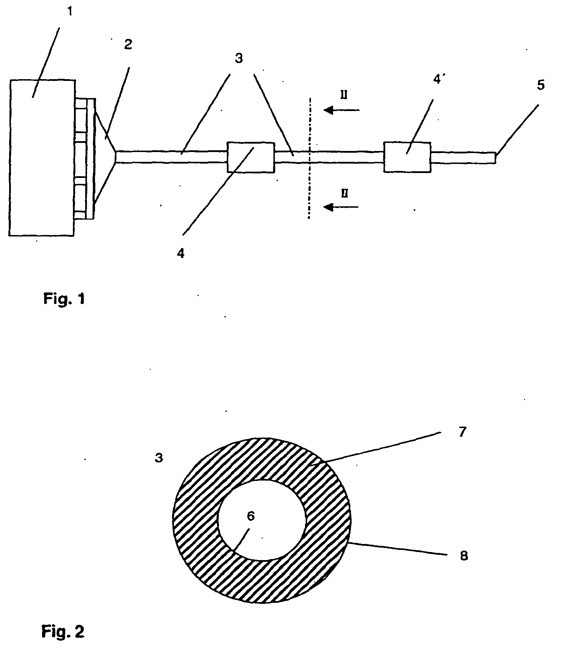

Figur 1 zeigt eine schematische Zeichnung einer erfindungsgemäßen Abgasanlage. Ausgehend von einer Brennkraftmaschine 1 wird das Abgas über einen Abgaskrümmer 2 durch ein Abgasrohr 3 und Schalldämpfer 4, 4' am Auslaß 5 in die Umgebungsluft abgegeben.

Figur 2 stellt einen Schnitt durch ein Abgasrohr 3 entlang der Linie II-II von Figur 1 durch die erfindungsgemäße Abgasanlage. Das Abgasrohr 3 besteht dabei aus einem inneren Rohr 6, einer Isolierschicht 7 und einem äußeren Rohr 8. Durch die Isolierschicht 7 wird sichergestellt, daß sich die Abgase auf dem Weg von der Brennkraftmaschine 1 zum Auslaß 5 des Abgassystems nur geringfügig abkühlen.

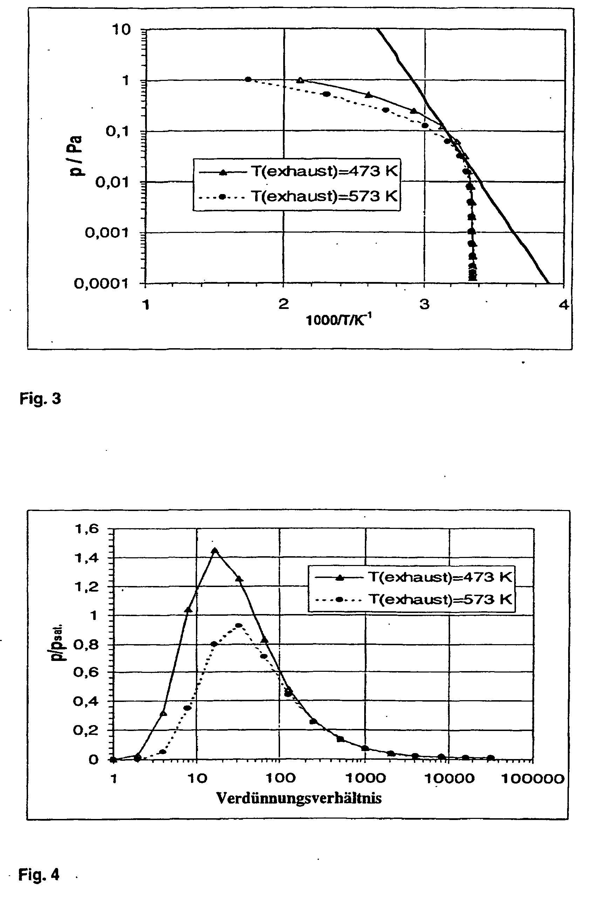

Figur 3 zeigt ein beispielhaftes Diagramm von zwei Partialdruckkurven während der Verdünnung des Abgases bei unterschiedlichen Abgastemperaturen (T(exhaust)) am Auslaß 5 sowie die zugehörige Sättigungskurve. Bei einem Abgasstrom, der erfindungsgemäß den Auslaß 5 der Abgasanlage mit erhöhter Temperatur (hier gezeigt 573 K) verläßt, wird die Sättigungskurve nicht überschritten, es tritt also keine Nanopartikelbildung auf.

In Figur 4 wird das Verhältnis von Partialdruck zu Sättigungsdruck über dem Verdünnungsverhältnis des Abgases in der Umgebungsluft für zwei unterschiedliche Kurven gezeigt. Dabei ist auch hier der Darstellung zu entnehmen, daß die Kurve, die den Abgasstrom mit der höheren Temperatur darstellt, die Sättigungsgrenze von 1 nicht erreicht.

## Patentansprüche

1. Abgasanlage für Kraftfahrzeuge, die mit einer thermischen Isolierung (7) gegen Temperaturverlust versehen ist, so dass die Abgase die Abgasanlage mit erhöhter Temperatur verlassen,
**dadurch gekennzeichnet, dass**
die Abgasanlage mit einer zusätzlichen Vorrichtung zur Abschirmung der Abgasanlage gegen den Fahrtwind versehen ist, wobei die Vorrichtung zur Abschirmung mittels Karosserieteilen ausgebildet ist.

2. Abgasanlage nach Anspruch 1,
**dadurch gekennzeichnet, dass**
die Vorrichtung zur Abschirmung mittels Spoiler ausgebildet ist.

3. Abgasanlage nach Anspruch 1,
**dadurch gekennzeichnet,dass**
die Vorrichtung zur Abschirmung mittels Wärmeschutzblechen ausgebildet ist.

4. Abgasanlage für Kraftfahrzeuge nach einem der vorherigen Ansprüche,
**dadurch gekennzeichnet, daß**
die Abgasanlage mit einer Vorrichtung zur Erhöhung der Abgastemperatur versehen ist.

5. Abgasanlage für Kraftfahrzeuge nach Anspruch 4,
**dadurch gekennzeichnet, daß**
die Vorrichtung zur Erhöhung der Temperatur eine elektrische Widerstandsheizung ist.

6. Abgasanlage für Kraftfahrzeuge nach Anspruch 4,
**dadurch gekennzeichnet, daß**
die Vorrichtung zur Erhöhung der Temperatur eine Heizung enthält, die den mitgeführten Brennstoff des Kraftfahrzeuges verwendet.

## Claims

1. Exhaust system for motor vehicles which is provided with thermal insulation (7) to protect against temperature loss so that the exhaust gases leave the exhaust system at a raised temperature, **characterized in that** the exhaust system is provided with an additional device for screening the exhaust system against the slipstream, with the screening device being formed by means of bodywork parts.

2. Exhaust system according to Claim 1, **characterized in that** the screening device is formed by means of spoilers.

3. Exhaust system according to Claim 1, **characterized in that** the screening device is formed by means of thermal protection panels.

4. Exhaust system for motor vehicles according to one of the preceding claims, **characterized in that** the exhaust system is provided with a device for increasing the exhaust temperature.

5. Exhaust system for motor vehicles according to Claim 4, **characterized in that** the device for raising the temperature is an electrical resistance heater.

6. Exhaust system for motor vehicles according to Claim 4, **characterized in that** the device for raising the temperature contains a heater which uses the fuel which is carried along in the motor vehicle.

## Revendications

1. Système de gaz d'échappement pour véhicules automobiles, muni d'une isolation thermique (7) pour empêcher les pertes en température, de sorte que les gaz d'échappement quittent le système de gaz d'échappement avec une température élevée,
**caractérisé en ce que**
le système de gaz d'échappement est muni d'un dispositif supplémentaire pour protéger le système de gaz d'échappement contre le vent relatif, le dispositif étant réalisé pour assurer la protection par le biais des pièces de la carrosserie.

2. Système de gaz d'échappement selon la revendication 1,
**caractérisé en ce que**
le dispositif est réalisé pour assurer la protection par le biais de carénages.

3. Système de gaz d'échappement selon la revendication 1,
**caractérisé en ce que**
le dispositif est réalisé pour assurer la protection par le biais de tôles de protection thermique.

4. Système de gaz d'échappement pour véhicules automobiles selon l'une quelconque des revendications précédentes,
**caractérisé en ce que**
le système de gaz d'échappement est muni d'un dispositif pour augmenter la température des gaz d'échappement.

5. Système de gaz d'échappement pour véhicules automobiles selon la revendication 4,
**caractérisé en ce que**
le dispositif pour augmenter la température est un chauffage à résistance électrique.

6. Système de gaz d'échappement pour véhicules automobiles selon la revendication 4,
**caractérisé en ce que**
le dispositif pour augmenter la température contient un chauffage qui utilise le carburant embarqué du véhicule automobile.
